# EUROPEAN PATENT APPLICATION

(11) **EP 4 183 462 A1**
(43) Date of publication of application: **24.05.2023**
(21) Application number: 21306629.3
(22) Date of filing: 23.11.2021
(51) Int. Cl.: B01D 11/02, C10M 175/00, C10G 21/08, C10G 71/00, C10N 40/25, C10N 40/26

(54) **METHOD FOR DEODORIZING REGENERATED LUBRICATING OILS USING SUPERCRITICAL CO2**

(71) Applicant: TotalEnergies OneTech, 92400 Courbevoie (FR)
(72) Inventor: DE FEO, Modestino, 69360 SOLAIZE (FR); REVERCHON, Ernesto, 84084 FISCIANO (IT); CAMPARDELLI, Roberta, 16145 GENOVA (IT)
(74) Representative: Cabinet Nony

(57) **Abstract**

The present invention relates to a process of deodorization of a at least partly regenerated lubricating oil, said process comprising the steps of:
- fractionating the at least partly regenerated lubricating oil in a countercurrent fractional distillation column with a countercurrent flow of supercritical carbon dioxide (sCO2), wherein said oil and supercritical CO₂ are fed in the countercurrent column with a ratio of the sCO₂ flow rate on oil flow rate ranging from 15 to 50; and
- recovering the deodorized lubricating oil which is freed of the bad smelling fraction, said bad smelling fraction being extracted within the supercritical CO₂.

It further relates to a process for preparing a lubricant composition from a deodorized base oil obtained according to the invention.

## Description

### Field of the Invention

The present invention relates to the field of regenerating used lubricant compositions. The present application more particularly concerns a method of deodorization of an at least partly regenerated lubricating oil to produce an oil with an acceptable smell, suitable for its use as base oil to prepare a fresh lubricant composition.

### Background

Lubricant compositions, also called "lubricants", are commonly employed in mechanical systems with the main aim of reducing the forces of friction between the various moving metallic components and for preventing premature wear or even damage of these components, and in particular of their surface. For example, they are employed in various systems of motor vehicles, including engine, transmission and hydraulic circuit.

However, when the lubricant composition aged, deteriorated and oxidized, it loses efficiency, contains various impurities and become "used lubricant", also called "waste lubricant", "aged lubricant" or "degraded lubricant". Thus, lubricants require change after a certain duration of utilization.

To the interest of environmental protection and resource conservation, and as the petroleum shortage is becoming a global problem nowadays, research focused on the development of re-refining or reconditioning methods of used lubricants.

By way of example among the various methods of re-refining waste oils, mention may be made of document EP 0 708 174 that concerns a process for purifying spent oils comprising steps of dehydration, vacuum distillation, solvent extraction and hydrotreatment.

A process for preparing a regenerated lubricating oil, especially with a diminution of the content of undesirable polycyclic aromatic hydrocarbons (PAHs), from a used lubricant is also described in WO 2018/109208 and comprises the passing of said used lubricant composition over activated carbon.

However, even if such processes enable to reach re-refined oils of high performances, they may present the drawback of exhibiting a strong bad smell.

An intense and unpleasant odor in lubricants is generally considered as undesirable for the operators that handle the lubricants but also for the users as the smell may permeate clothes and the surroundings.

Accordingly, the malodor of some re-refined oils has unfortunately hindered their use as base oils to formulate finished lubricant compositions.

Attempts of masking the bad smell of mineral oils by use of fragrances have been made, such as described in document EP 1 884 555. However, the efficacity of the addition of odor-masking additives, even in significant amount, is insufficient for masking or suppressing very strong bad odors.

In a field distinct from that of lubricating oils, we can mention document WO 2008/138575 that proposes to obtain a deodorized and stabilized food-grade marine oil by submitting the oil to a counter-current steam distillation in a thin film column containing a structured packing. However, such deodorization process implies high processing temperature and energy.

Current environmental concerns result in a need to develop an efficient and environmentally friendly solution for deodorizing regenerated oils to render them suitable for re-used in lubricants.

For this reason, use of supercritical fluid extraction (SFE) technology appears as very potential and environmentally friendly. Supercritical carbon dioxide (CO₂) is a particularly interesting solvent given its high dissolution power, low cost, non-flammable and is environmentally friendly. In addition, the temperature and pressure critical conditions (Tc = 32°C and Pc = 74 bars) are easily accessible.

Methods using liquids in a supercritical state such as supercritical CO2 have already been proposed for treating waste oils. For example, mention may be made of document EP 1 165 728 that describes a method for the treatment of oils, comprising contacting the oil with a supercritical fluid to separate a light fraction, a heavy fraction and an intermediate majority fraction within an extraction column, followed by treatment of the intermediate fraction in separation and/or reaction stages.

Mention may also be made of the document KR 101016348 that describes a method for separating radioactive contaminants from a waste oil, especially a radioactive waste oil generated in the nuclear power industry, comprising a dissolution step of supercritical solvent to the dehydrated waste oil, then filtration through a separation membrane. Document CN 102766479 also proposes a method for decolorizing and refining lubricating oil using a supercritical fluid.

None of these processes aims at deodorizing an at least partly re-refined oil.

### Summary of the invention

The aim of the present invention is to provide a novel method making it possible to efficiently deodorize an at least partly regenerated or "re-refined" lubricating oil, in an environmentally friendly manner, to make it suitable for reuse as a base oil for lubricant.

The present invention thus relates, according to a first of its aspects, to a process or method of deodorization of an at least partly regenerated lubricating oil, said process comprising the steps of:
- fractionating the at least partly regenerated lubricating oil in a countercurrent fractional distillation column with a countercurrent flow of supercritical carbon dioxide (sCO₂), wherein said oil and supercritical CO₂ are fed in the countercurrent column with a ratio of the sCO₂ flow rate on oil flow rate ranging from 15 to 50; and
- recovering the deodorized lubricating oil which is freed of the bad smelling fraction, said bad smelling fraction being extracted within the supercritical CO₂.

More particularly, during the fractionation according to the invention, the at least partly regenerated lubricating oil of bad smell is injected into countercurrent column from the upper part, whereas supercritical CO2 flows through column from below. The deodorized lubricating oil is thus recovered from the bottom of the column, while the bad smelling fraction is separated within sCO₂ and removed from the extract exiting the column topside. Preferred conditions to implement the fractionation step in the countercurrent column in accordance with the invention will be given in the remainder of the text.

By "deodorization" is meant that the method of the invention is suitable for reducing or even suppressing the oil malodor. Thus, the "deodorized" oil achieved by the method of the invention has a reduced, or even suppressed, malodor, compared with the oil before the fractionation treatment and, in any case, the deodorized oil achieved by the method of the invention has an acceptable smell for its use as a lubricating base oil.

In the present invention, by "used lubricant composition" (also referred to more simply as "used oil") or "waste lubricating composition" is meant any lubricant composition that has been used for lubricating parts, in particular mechanical parts, of a mechanical system, such as bearings, gears, engines.

The used lubricant composition may be of various sources. In particular, it can be an engine used lubricant oil, for example used oil for marine engine. Having regard to their origin, the used lubricant, in particular engine lubricant compositions, may contain degradation products derived from the oil itself or from additives therein, as well as particles of metal, metal oxides and the like from the engine or other machinery.

In contrast to "used lubricant composition", for the purposes of the present invention, the expression "fresh lubricant composition" is intended to denote a lubricant composition which has not yet been used for lubricating parts of a mechanical system, and which is ready to this use.

In the present invention, the terms "at least partly regenerated oil" (also referred to more simply as "regenerated", "re-refined", "recycled", "reprocessed" or "recovered" oil) refer to an oil which has been obtained, at least in part, from a used lubricating composition that has been subjected to one or more treatment steps intended to recover a purified lubricating oil. In other words, the at least partly regenerated oil is recovered from one or more treatment steps of a waste oil aimed at removing, at least partly, the contaminants of the waste oil, such as dirt, water, fuel, metallic elements and degraded additives.

As will be detailed hereafter, the prior treatment steps that the at least partly regenerated oil has been subjected to, before its introduction in the fractionation treatment according to the invention, may be more preferably chosen from dehydration, distillation, filtration and/or passing of said lubricating oil over an adsorbent support such as activated carbon.

The at least partly regenerated oil of the invention is thus distinct from a used lubricating oil or composition. Compared with a waste lubricant oil, the at least partly regenerated oil indeed exhibits a significantly reduced content of undesirable contaminants, especially of water, diesel and advantageously a reduced PAH content, and preferably satisfies most of quality standards of lubricating base oils, except the bad smelling.

The at least partly regenerated oil of the invention is also distinct from a virgin oil (i.e. a newly refined lubricating oil), that would not have the malodor that the method of the invention precisely aims at eliminating.

The at least partly regenerated oils generally have a content of metallic elements, in particular including iron, calcium, magnesium, of less than 100 ppm, preferably of less than 50 ppm. Generally, the at least partly regenerated oils have a content of silicon (Si) of less than or equal to 100 ppm, preferably less than or equal to 50 ppm, more preferably less than or equal to 40 ppm, in particular ranging between 5 to 40 ppm.

The method of deodorization according to the invention is more particularly advantageous to treat partly re-refined lubricating oils that present, even after one or more purification steps, a very strong odor that hinders their use as base oils for formulating a new lubricating composition.

The process of deodorization according to the invention proves to be advantageous in several aspects.

First, it advantageously takes advantage of the supercritical technology to free the at least partly regenerated oil of the bad smelling components.

Thus, the process of deodorization according to the invention advantageously does not require the use of any additional solvent. In particular, it does not comprise any solvent extraction step. By solvent extraction is meant any liquid/liquid extraction step.

Also, it does not require addition of any odor-masking additive to the lubricating oil.

As illustrated in the examples below, the inventors have demonstrated that the oil recovered after fractionation with sCO₂ countercurrent flow in accordance with the invention exhibits significantly reduced odor compared to the at least partly regenerated lubricating oil before fractionation.

Without wishing to be bound by a theory, the compounds responsible for the bad smelling of the oil have, in the specific conditions of the counter-current fractionation pursuant to the method of the invention, a high affinity with supercritical carbon dioxide (also noted "sCO₂" in the rest of the text), thus being extracted within the supercritical CO2 in the counter-current column of the invention.

The unacceptable smell that interferes with the use of the at least partly regenerated oil as base oil is thus eliminated in the recovered oil product freed of the sCO₂ extract.

Following the fractionation step pursuant to the method of the invention, a lubricating oil with a satisfactory smell, preferably with no smell, can thus be retrieved as the bottom product of the countercurrent column, without any additional step.

Thus, the process according to the invention to deodorize regenerated oils is particularly ecofriendly, easy to implement, economical, hazard-free and does not use toxic products.

The process of the invention is particularly advantageously to deodorize an at least partly regenerated lubricating oil obtained from a used engine lubricant, in particular a used lubricant of vehicle or marine engines, for example of heavy duty, off road or marine engines, in particular a used lubricant of marine engines.

Thus, according to another aspect, the invention relates to the use of a method of deodorization according to the invention as defined above and detailed hereafter, for deodorizing an at least partly regenerated engine lubricating oil, in particular obtained from a used lubricant of vehicle or marine engines, for example of heavy duty, off road or marine engines, in particular from a used lubricant of marine engines.

The deodorized lubricating oil obtained by the method of the invention is advantageously suitable for reuse as a base oil without additional processing, for example for sale as such or for post finishing fractionation into different viscosities, or for compounding with additives to make a finished lubricant composition.

Thus, the present invention also describes the use of a deodorized lubricating oil retrieved from the process according to the invention for formulating a fresh lubricating composition, in particular by combining it with at least one conventional additive for lubricants.

The present invention also relates to a process or method for preparing a lubricant composition, comprising at least the steps of:
(i) recovering a deodorized base oil from an at least partly regenerated oil, by implementing a process of deodorization according to the invention as defined hereabove; and
(ii) adding to said deodorized base oil at least one additive, preferably chosen from friction modifying additives, extreme pressure additives, anti-wear additives, detergents, antioxidants, viscosity index (VI) improvers, pour point depressants (PPDs), dispersants, antifoaming agents, thickeners, and mixtures thereof.

Such a process advantageously enables to formulate lubricants with a low-carbon footprint as it is prepared from re-refined base oil, and further with no disadvantage in terms of smelling.

Other characteristics, alternative forms and advantages of the process of deodorization according to the invention will emerge more clearly on reading the description and the examples which will follow, given by way of illustration and without limitation of the invention.

In the continuation of the text, the expressions "between... and...", "ranging from... to..." and "varying from... to..." are equivalent and are intended to mean that the limits are included, unless otherwise mentioned.

Unless otherwise indicated, the expression "comprising a" or "comprising an" should be understood as "comprising at least one".

### Brief description of the drawings

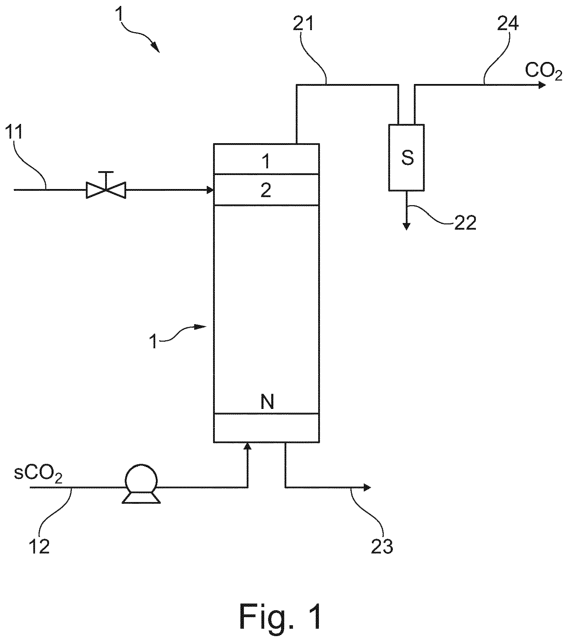

[Fig 1] shows a schematic representation of the fractionation plant as used in the examples for conducting the process of the invention with a countercurrent fractional distillation column (1). The device is presented in block schematic form, without enumeration of the pumps, valves, heat exchangers or other equipment which one of ordinary skill in the art will recognize as necessary for implementing the regeneration process of the invention.

### Detailed description of the invention

### PROCESS OF DEODORIZATION

As mentioned here-above, the process of deodorization according to the present invention is based on a fractionation step of the at least partly regenerated oil in a countercurrent fractional distillation column with a sCO₂ countercurrent flow.

The method of the invention is applicable to any at least partly regenerated lubricating oils, in other words, as defined hereabove, to oils derived from one or more treatment steps of used lubricating oils.

The major constituent of used lubricants (also referred to as "used oils"), and consequently of at least partly regenerated lubricating oils, is one or more base oils of lubricating viscosity, such as synthetic or natural mineral oils, animal or vegetable oils or mixtures thereof. Such base oils may in particular be oils of mineral or synthetic origin belonging to groups I to V according to the classes defined in the API classification (or their equivalents according to the ATIEL classification) and presented in the table below, or mixtures thereof.

**[Tableau 1]**

| | Saturates content | Sulphur content | Viscosity index (VI) |
|---|---|---|---|
| Group I Mineral oils | < 90% | > 0.03% | 80 ≤ VI < 120 |
| Group II Hydrocracked oils | ≥90% | ≤0.03% | 80 ≤ VI < 120 |
| Group III Hydrocracked or hydroisomerized oils | ≥90% | ≤0.03% | ≥ 120 |
| Group IV | Polyalphaolefins (PAO) | | |
| Group V | Esters and other bases not included in groups I to IV | | |

The used lubricant composition, which the at least partly regenerated oil derives from, may comprise more than 50 wt.% of base oil(s) relative to its total weight, in particular more than 60 wt.% of base oil(s), and more particularly between 60 and 99 wt.% of base oil(s). The process of the invention is particularly advantageous for deodorizing at least partly regenerated oils incorporating base oil(s) of group(s) ≥ II, in other words comprising one or more oil(s) of groups II, III, IV and/or V, in particular of groups II and/or III.

According to a particular embodiment, the at least partly regenerated oil can be derived from the treatment of a used lubricant composition employed for an engine, for example a used lubricant of vehicle or marine engines, for example of heavy duty, off road or marine engines, in particular a lubricant of marine engines.

The used lubricant composition, which the at least partly regenerated oil derives from, may also contain various additives classically used in lubricant compositions such as friction modifying additives, extreme pressure additives, anti-wear additives, detergents, antioxidants, viscosity index (VI) improvers, pour point depressants (PPDs), dispersants, antifoaming agents, thickeners, and mixtures thereof.

The properties of the used lubricant composition are degraded resulting from its use for a greater or lesser period for lubricating mechanical parts, in particular in an internal combustion engine.

The used lubricant composition may thus comprise one or more of these additives and impurities resulting from the degradation of additives originally present in the lubricant composition or resulting from the wear of the lubricated mechanical parts.

The composition of the used lubricant may of course be different depending on the origin of the lubricant, of its initial composition and of the fact that it may have been contaminated in a different way depending on its use.

The at least partly regenerated oil may be prior obtained by subjecting a used lubricant composition to any known re-refining process step.

In particular, these treatment steps for recovering a partly regenerated lubricating oil aim at removing at least partially water, solid particles, fuel and/or other contaminants such as PAH unsuitable for incorporating in lubricants.

According to a particular embodiment, the prior treatment to recover the at least partly regenerated lubricating oil from a used lubricant composition comprises, in particular consists of, one or more steps selected from dehydration, distillation, filtration and/or passing of said lubricating oil over an adsorbent support, preferably as detailed hereafter.

Accordingly, the invention relates to a method for preparing a regenerated lubricating oil that is freed of bad smelling, said method comprising the steps of:
- recovering a at least partly regenerated lubricating oil from a used lubricant composition, in particular by implementing one or more treatment steps, preferably chosen from dehydration, distillation, filtration and/or passing of said lubricating oil over an adsorbent support, and more preferably in the conditions detailed hereafter;
- fractionating the at least partly regenerated lubricating oil in a countercurrent fractional distillation column with a countercurrent flow of supercritical carbon dioxide (sCO₂)? wherein said oil and supercritical CO₂ are fed in the countercurrent column with a ratio of the sCO₂ flow rate on oil flow rate ranging from 15 to 50; and
- recovering the deodorized lubricating oil which is freed of the bad smelling fraction, said bad smelling fraction being extracted within the supercritical CO₂.

Preferably, the at least partly regenerated lubricating oil of the invention is obtained by subjecting a used lubricant composition to at least one dehydration step. This dehydration step allows removing entrained water in the used lubricant.

Advantageously, the at least partly regenerated oil subjected to the fractionation step according to the invention thus comprises less than 10 % by weight of water, in particular less than 5 % by weight of water and more particularly less than 2 % by weight of water, especially less than 1 % by weight of water, relative to the total weight of the at least partly regenerated oil to be deodorized.

This dehydration step can be conducted using any method known to persons skilled in the art. For example, it can be performed by distillation, decantation, heating or passing warm dry air over the lubricating composition.

According to an embodiment, the dehydration may be conducted at a temperature of between 50°C and 250°C, preferably between 100°C and 200°C, for example at 160 °C. In particular, it can be conducted at a pressure of between 50 000 and 150 000 Pa, preferably at atmospheric pressure.

Preferably, the at least partly regenerated lubricating oil of the invention is obtained by subjecting a used lubricant composition to at least one filtering step. Such a filtration mainly aims at removing solid particles from the used lubricating composition which could affect the operation of the counter-current column.

The filtration can be conducted using any method known to persons having ordinary skilled in the art, for example through a sieve or using systems of diatomaceous earth type.

Advantageously, the at least partly regenerated lubricating oil of the invention is obtained by subjecting a used lubricant composition to at least one distillation step, preferably conducted after a dehydration step. The distillation step(s) can be carried out using any technique known to persons having ordinary skills in the art.

Examples of distillations that can be performed on used lubricating compositions are atmospheric distillation and vacuum distillation.

The distillation(s) can more particularly be implemented at a temperature ranging from 100°C to 500°C, preferably from 200°C to 400°C, and more preferably from 300°C to 380°C, and preferably, at a pressure ranging from 25 to 2000 Pa, preferably from 50 to 1000 Pa, in particular from 50 to 250 Pa, e.g. about 100 Pa.

Advantageously, the at least partly regenerated lubricating oil of the invention may be obtained by subjecting a used lubricant composition to a distillation step to remove water, followed by a distillation step to remove diesel and finally a distillation step under reduced pressure.

Advantageously, the at least partly regenerated lubricating oil of the invention is obtained by subjecting a used lubricant composition to at least a passing of said used lubricant composition over an adsorbent support, also referred to more simply as "adsorbent".

The adsorbent support advantageously makes it possible to selectively adsorb aromatic compounds, in particular polycyclic aromatic hydrocarbons (PAHs).

In particular, the treatment by passing over an adsorbent support, preferably over activated carbon, advantageously enables to lower the content of polycyclic aromatic hydrocarbons (PAHs), selected in particular among chrysene, benzo[b]fluoranthene, benzo[j]fluoranthene, benzo[k]fluoranthene, benzo[e]pyrene, benzo[a]pyrene, dibenz[a,h]anthracene and/or benz[a]anthracene, from the used lubricant composition.

By "passing of the used lubricant composition over an adsorbent support" is meant the flowing of the used lubricant composition over the adsorbent support.

Adsorbents which can be used include, in particular, activated carbon, zeolites, clay or functionalized porous compounds.

According to a preferred embodiment, the at least partly regenerated lubricating oil of the invention is obtained by subjecting a used lubricant composition to at least a passing of said used lubricant composition over activated carbon.

For example, the at least partly regenerated lubricating oil may be obtained from the method for processing used lubricant compositions as described in the document WO 2018/109208. Thus, according to a preferred embodiment variant, the invention relates to a method for preparing a regenerated lubricating oil that is freed of bad smelling, said method comprising the steps of:
- recovering an at least partly regenerated lubricating oil from a used lubricant composition, preferably by implementing at least the passing of said lubricating oil over an adsorbent support, and more preferably over activated carbon;
- fractionating the at least partly regenerated lubricating oil in a countercurrent fractional distillation column with a countercurrent flow of supercritical carbon dioxide (sCO₂), wherein said oil and supercritical CO₂ are fed in the countercurrent column with a ratio of the sCO₂ flow rate on oil flow rate ranging from 15 to 50; and
- recovering the deodorized lubricating oil which is freed of the bad smelling fraction, said bad smelling fraction being extracted within the supercritical CO₂.

Advantageously, the treatment of the used lubricant composition to recover a at least partly regenerated lubricating oil does not comprise any solvent extraction step.

When activated carbon is used for the processing of the used lubricant composition, the quantity of activated carbon used is preferably of between 0.5 and 60 g of activated carbon per liter of used lubricant composition, preferably between 0.5 and 50 g/L, preferably from 1 to 50 g/L, preferably between 1 and 30 g/L, e.g. between 5 and 60 g/L, preferably between 5 and 50 g/L.

The rate of passing the used lubricant composition over activated carbon can be between 1 m³/h and 15 m³/h, e.g. between 5 and 10 m³/h.

Preferably, the activated carbon is characterized by a density of between 200 and 500 kg/m³, measured for example in accordance with standard ASTDM D2854.

Preferably, the activated carbon is coal carbon preferably comprising from 70 to 95 %, advantageously from 80 to 90 % of carbon by weight.

The step of passing of said lubricating oil over an adsorbent support, and more preferably over activated carbon is advantageously preceded by the following prior steps:
- one or more distillation steps, in particular as detailed above; and
- a filtering step, in particular as detailed above.

Thus, according to a particular preferred embodiment, the at least partly regenerated lubricating oil implemented in the deodorization process of the invention is obtained by subjecting a used lubricant composition to at least:
- one or more distillation steps, in particular as detailed above;
- a filtering step; in particular as detailed above; and
- a passing of said used lubricant composition over an adsorbent support, preferably over activated carbon.

Advantageously, the regenerated lubricating oil obtained from the used lubricant composition for its use in the deodorization process of the invention comprises less than 100 ppb of each of the following PAHs: chrysene, benzo[b]fluoranthene, benzo[j]fluoranthene, benzo[k]fluoranthene, benzo[e]pyrene, benzo[a]pyrene, dibenz[a,h]anthracene, benz[a]anthracene. The content of these PAHs being determined according to standard EN 16143.

According to a particular embodiment, the at least partly regenerated lubricating oil implemented in the deodorization process of the invention is obtained by subjecting a used lubricant composition to at least:
- a dehydration step, preferably conducted at between 100°C and 200°C, such as about 160°C, and at atmospheric pressure; followed by
- a distillation step, preferably conducted at a temperature of between 300°C and 400°C, such as about 360°C, and a pressure of between 50 and 200 Pa, such as about 100 Pa.

The invention is not limited to the use of partly regenerated lubricating oils obtained as described above. Any partly regenerated lubricating oil obtained by various regenerating or re-refining processes may be implement for being deodorized by the method according to the invention.

The at least partly regenerated lubricating oil advantageously has a kinematic viscosity measured at 100°C according to ASTM D445 between 2 and 8 mm²·s⁻¹, in particular between 3 and 6 mm²·s⁻¹.

In particular, the at least partly regenerated lubricating oil that is treated in a deodorization process according to the invention is characterized by a bad smelling which is detrimental to its reuse as base oil.

### Fractional distillation step with sCO₂ countercurrent flow

As mentioned above, the deodorization according to the process of the invention relies on a fractionation step of said partly regenerated lubricating oil in a countercurrent fractional distillation column with a countercurrent flow of supercritical CO₂.

The fractionation conducted according to the invention thus contacts counter currently the party regenerated lubricating oil and supercritical CO₂, thereby operating a liquidsupercritical CO₂ extraction step.

As mentioned above, the fractionation step according to the process of the invention is performed by feeding the at least partly regenerated oil and supercritical CO₂ into the countercurrent column with a ratio of sCO₂ flow rate on oil flow rate (sCO₂ flow rate/oil flow rate) ranging from 15 to 50, preferably from 20 to 45.

According to a preferred embodiment, the ratio of sCO₂ flow rate on oil flow rate ranges from 20 to 50, in particular is higher than or equal to 25, more particularly ranges from 25 to 50, preferably from 27 to 45.

Preferably, the at least partly regenerated oil and sCO₂ are introduced in the fractionation column with controlled flow rates so that the ratio sCO₂ flow rate/oil flow rate is maintained within the desired range.

By way of example, in a laboratory scale counter-current column, the at least partly regenerated oil may be fed into the countercurrent column with a flow rate, ranging from 0.01 to 50 mL/min, in particular from 1 to 5 mL/min.

By way of example, at a laboratory scale, the sCO₂ may be fed into the countercurrent column with a flow rate ranging from 0.01 to 50 kg/h, such as from 1 to 5 kg/h.

The flow rate conditions can be easily transposed on an industrial scale, by maintaining the desired ratio of sCO₂ flow rate on used lubricant flow rate as specified hereabove.

Preferably, the fractionation step in the countercurrent column in accordance with the invention is performed at a temperature ranging from 40°C to 200°C, in particular from 50°C to 150°C, preferably from 50°C to 100°C and more preferably from 50 to 70°C, e.g. of 60°C. Preferably, it is performed at a pressure ranging from 50 to 300 bars, in particular from 100 to 250 bars, notably from 100 to 200 bars and more particularly from 100 to 150 bars. Preferably, the fractionation step in the countercurrent column in accordance with the invention is performed at a pressure strictly higher to 100 bars, preferably higher or equal to 110 bars and more preferably ranging from 110 to 130 bars, preferably lower than or equal to 125 bars, in particular ranging from 110 to 120 bars, e.g. 120 bars.

If the pressure is too high, there is a risk that a fraction of oil also solubilized within sCO₂, thereby lowering the yield of the deodorization process.

According to a particularly preferred embodiment, the fractionation step is implemented at a temperature ranging between 50 and 150°C, preferably at 60°C, and at a pressure strictly higher than 100 bars and lower than or equal to 130 bars, preferably ranging between 110 and 120 bars.

The temperature and pressure of the fractionation step can act on the affinity of the compounds in the two phases (liquid and supercritical phases) processed in the fractionation column, and thus to the mass transfer between the two phases in contact inside the fractionation column.

Without wishing to be bound by a theory, the bad smelling fraction of the at least partly regenerated lubricant oil is brought by relatively low molecular weight compounds that have a high affinity with sCO₂ in the conditions of the invention. The fractionation with sCO₂ countercurrent flow in the conditions of the invention advantageously separates the smelling components that are extracted within the sCO₂ stream in the column from the remaining oil components.

Preferably, the fractional distillation according to the invention is implemented in a packed column, namely a column filled, or "packed", with a material allowing the oil to flow down over a packing surface in contact with the upward sCO₂ flow, thus increasing the contact surface between the oil phase and the sCO₂ phase. The packed column can contain either structured or random packing of a conventional type known to those skilled in the art. Preferably, the countercurrent column is filled with metallic packings.

Advantageously, the sCO₂ countercurrent flow fractionation step of the process according to the invention may thus be conducted in a countercurrent column having multiple theoretical plates and comprising metallic packings.

As represented schematically in Figure 1, for implementing the fractionation of the at least partly regenerated oil in the conditions of countercurrent flow of sCO₂, said oil and the sCO₂ are injected continuously and counter-currently into the fractional distillation column (1) in counter-current.

More particularly, for the extraction process in the counter-current column, the at least partly regenerated oil (11) is introduced in the upper part of the column (1), thus circulates in a descending manner in the column, while the supercritical CO₂ (12) is fed at the bottom part of the column (1) and circulates in an ascending manner. The deodorized lubricating oil is thus recovered from the bottom of the column

The upper part (respectively the bottom part) of the column is defined by the part located between the top of the column (respectively the bottom of the column) and the middle of the column. Preferably, the at least partly regenerated oil is fed in the upper part of the column, and the sCO₂ from the bottom of the column.

The at least partly regenerated oil can for example be injected, out of a feeding tank (not represented in Figure 1), into the upper part of counter-current column. The system for feeding the at least partly regenerated oil can be of any type known to the person skilled in the art, provided that it makes it possible controlling the oil flow rate that enters in the fractionation column. For example, the system for feeding the at least partly regenerated oil into the column may be equipped with a pump such as a membrane pump, an impulse pump, a velocity pump, a gravity pump, a steam pump or a valveless pump.

Preferably, the oil is fed into the column through a membrane pump. This membrane pump is especially suitable to deliver the oil with the desired flow rate.

The sCO₂ feed may be prior obtained by compressing gaseous CO₂ in appropriate conditions of temperature and pressure.

A lubricating oil (23) that is freed of the bad smelling fraction can thus be recovered at the bottom of the column.

Finally, the smelling fraction (in other word the smelling components) can be more particularly removed from the extract (21) that exits the counter-current column topside.

In particular, the smelling components can be retrieved from the extract by eliminating CO₂, preferably by a simple pressure-let-down. The counter-current column can thus be directly connected with separation tanks, in which extracted smelling substances are collected and can be retrieved when depressurizing.

The eliminated CO₂ (24) may be recovered and recycled after being reconditioned in supercritical state to be re-introduced in the countercurrent column.

### Preparation of a fresh lubricating composition

The lubricating oil obtained by the deodorization process of the invention is advantageously roughly comparable in properties to that of virgin oils and satisfies the quality standards of base oils.

In particular, the lubricating oil retrieved from the process of the invention has an acceptable smell, especially is odourless.

The lubricating oil retrieved from the process of the invention can thus be suitable for sale as such or for post finishing into different viscosity grades, and/or for compounding with additives to make a finished lubricating composition.

According to one embodiment, the lubricating oil retrieved from the process of the invention is reused as base oil to formulate a fresh lubricant composition.

Thus, according to another aspect, the present invention relates to a method for preparing a fresh lubricant composition comprising at least the steps of (i) deodorizing a at least partly regenerated oil according to the process of the invention, as detailed hereabove, and (ii) supplementing the obtained deodorized base oil with at least one additive.

The additive(s) may be of any type suitable for use in a lubricant and chosen with regard to the destination of the lubricant.

The deodorized base oil can also be blend with one or more virgin base oil(s) (i.e. newly refined lubricating oil that have been never used in lubricants).

The deodorized base oil can be reused to formulate lubricants for various lubricating mechanical systems, such as bearings, gears or the different mechanical parts of an engine. In particular, the recovered deodorized base oil of the invention may be used for formulating lubricants for drive systems, such as the transmission or the engine in a drive system, in particular for heavy or light vehicles or marine engines.

The additives may be introduced individually and/or in the form of a mixture like those already on sale for the commercial formulations of lubricants for vehicle engines, with a level of performance as defined by the ACEA (European Automobile Manufacturers Association) and/or the API (American Petroleum Institute), which are familiar to a person skilled in the art.

These additives may in particular be selected from friction modifying additives, extreme pressure additives, anti-wear additives, detergents, antioxidants, viscosity index (VI) improvers, pour point depressants (PPDs), dispersants, antifoaming agents, thickeners, and mixtures thereof.

In particular, the additives may be added to a deodorized base oil obtained from the fractionation distillation process of the invention in an amount that can be determined by one having ordinary skills in the art.

The following examples are provided as illustration and in no way limit the scope of this invention.

### Examples

### Method for preparing the regenerated oils

The oils implemented in the examples below are re-refined oils from used lubricant compositions that were prior submitted to distillation, filtration and/or passing over activated carbon.

The re-regenerated oils have a highly bad smelling fraction. They have a density of 1 kg/dm³.

### Fractionation step

The deodorization by fractionation is carried out with a laboratory pilot comprising, as represented on Figure 1, a countercurrent fractional distillation column (1), a sCO₂ supply system to inject sCO₂ (12) with a controlled rate at the bottom of the countercurrent column, a liquid supply system to introduce with a controlled rate the re-refined oil (11) in the upper part of the column.

The fractional distillation column is 2400 mm height with an inner diameter of 17.5 mm. All parts are made in AISI 316 stainless steel and are designed to withstand up to a maximum internal pressure of 70 MPa at 30°C. The column is filled with stainless steel bell packings, having a nominal size of 5 mm a specific surface of with 1600 m⁻¹ and a porosity of 0.9. Temperature along the column can be controlled by automatic controllers.

The re-refined oil (11) is sent from a reservoir directly into the fractional distillation column (1) by a piston pump with a flow rate of 1 mL/min; 1.5 mL/min or 2 mL/min.

The sCO₂ (12) is sent to the fractional distillation column (1) by a high-pressure diaphragm pump (able to deliver flow rates up to 12 kg/h) with a flow rate of 2.5 kg/h.

The countercurrent fractional distillation column functions at controlled pressure and temperature with the fixed values as specified hereafter. The experiment duration is of 8 hours. The steady state conditions are reached after approximately 3 hours.

Then, the oil at the bottom of the column is recovered each hour for five hours and analyzed. Also, the fraction exiting the column topside is recovered and analyzed.

### Evaluation of the olfactive properties of the recovered bottom product

The odor of the recovered oil retrieved at the bottom of the column is assessed by a panel of five people before and after the fractionation step into the counter-current column.

In particular, the panel judges whether the recovered oil exhibits an unpleasant odor or not. The absence of unpleasant odor means that the regenerated oil has been at least partly freed of the bad smelling compounds.

The table below summarizes the operating conditions of the counter-current column and the smell appreciation of the recovered oil.

| **Sample** | **Pressure [bar]** | **Temperature [°C]** | **sCO₂ flow rate [Kg/h]** | **Oil flow rate [mL/min]** | **sCO₂ /oil flow rate ratio** | **Unpleasant odor after fractionation** |
|---|---|---|---|---|---|---|
| Reference | - | - | - | - | - | Yes |
| Re-refined Oil 1 (outside invention) | 120 | 60 | 2.5 | 2 | 20.8 | Flooding^{(∗)} |
| Re-refined Oil 2 (Outside invention) | 110 | 60 | 2.5 | 2 | 20.8 | Flooding^{(∗)} |
| Re-refined Oil 3 (outside invention) | 100 | 60 | 2.5 | 1 | 41.7 | Yes |
| Re-refined Oil 4 (Invention) | 110 | 60 | 2.5 | 1 | 41.7 | No |
| Re-refined Oil 5 (Invention) | 120 | 60 | 2.5 | 1 | 41.7 | No |
| Re-refined Oil 6 (Invention) | 120 | 60 | 2.5 | 1.5 | 27.8 | No |

^{(∗)} Flooding means that the column was blocked by the mutual obstacle of the two fluids and it was therefore not possible to conduct the deodorizing process. It means that oil flow rate at those conditions was too high with respect to sCO₂ flow rate.

These results demonstrate that the regenerated oil subjected to a fractionation process in the conditions of the invention is freed of the smelling components compared with the reference oil.

## Claims

1. A process of deodorization of a at least partly regenerated lubricating oil, said process comprising the steps of:
- fractionating the at least partly regenerated lubricating oil in a countercurrent fractional distillation column with a countercurrent flow of supercritical carbon dioxide (sCO₂), wherein said oil and supercritical CO₂ are fed in the countercurrent column with a ratio of the sCO₂ flow rate on oil flow rate ranging from 15 to 50; and
- recovering the deodorized lubricating oil which is freed of the bad smelling fraction, said bad smelling fraction being extracted within the supercritical CO₂.

2. The process as claimed in claim 1, in which the at least partly regenerated lubricating oil is prior obtained by subjecting a used lubricant composition to one or more steps selected from dehydration, distillation, filtration and/or passing of said lubricating oil over an adsorbent support, preferably on activated carbon.

3. The process as claimed in any one of the preceding claims, in which the at least partly regenerated oil (11) is introduced in the upper part of the countercurrent column (1), while the supercritical CO₂ (12) is fed at the bottom of the column (1), said deodorized lubricating oil being recovered from the bottom of the column.

4. The process as claimed in any one of the preceding claims, in which the ratio of sCO₂ flow rate on oil flow rate is higher than or equal to 25, in particular ranges from 25 to 50, preferably from 27 to 45.

5. The process as claimed in any one of the preceding claims, in which the fractionation is performed at a temperature ranging from 40°C to 200°C, in particular from 50°C to 150°C, preferably from 50°C to 100°C.

6. The process as claimed in any one of the preceding claims, in which the fractionation is performed at a pressure ranging from 50 to 300 bars, in particular strictly higher to 100 bars, preferably higher or equal to 110 bars and more preferably ranging from 110 to 130 bars, preferably lower than or equal to 125 bars, in particular ranging from 110 to 120 bars.

7. The process as claimed in any one of the preceding claims, comprising the additional step of removing the bad smelling fraction from the sCO₂ extract exciting the counter-current column topside.

8. A use of the process as defined in any one of claims 1 to 7 for deodorizing an at least partly regenerated engine lubricating oil, in particular obtained from a used lubricant of vehicle or marine engines, for example of heavy duty, off road or marine engines, in particular from a used lubricant of marine engines.

9. A process for preparing a lubricant composition comprising at least the steps of:
(i) recovering a deodorized base oil from a at least partly regenerated oil by implementing a process of deodorization as defined in any one of claims 1 to 7; and
(ii) adding to said deodorized base oil at least one additive, preferably chosen from friction modifying additives, extreme pressure additives, anti-wear additives, detergents, antioxidants, viscosity index (VI) improvers, pour point depressants (PPDs), dispersants, antifoaming agents, thickeners, and mixtures thereof.

10. The process as claimed in the preceding claim, for preparing a lubricant composition for drive systems, such as the transmission or the engine in a drive system, in particular for heavy or light vehicles or marine engines.
